# EUROPEAN PATENT SPECIFICATION

(11) **EP 0 630 956 B1**
(45) Date of publication and mention of the grant of the patent: **27.12.2000**
(21) Application number: 94304479.2
(22) Date of filing: 20.06.1994
(51) Int. Cl.: C09K 21/14, C09K 21/12, A62C 2/06

(54) **Duplex and sandwich fire resistant materials and fire protective coatings from lightweight cold curing syntactic foams**
Feuerfeste Duplex- und Sandwichmaterialien und Brandschutzüberzüge aus leichten kalthärtenden syntaktischen Schäumen
Matériaux duplex et sandwich résistant au feu et enduits de protection au feu à base de mousses syntactiques légères durcissant à froid

(30) Priority: 23.06.1993 GB 9312926
(43) Date of publication of application: 28.12.1994
(73) Proprietor: ALDERLEY MATERIALS LIMITED, Wickwar, Gloucester GL12 8NP (GB)
(72) Inventor: Aslin, David Charles, Belper, Derbyshire DE56 2TH (GB)
(74) Representative: Campbell, Iain Angus

(56) References cited:
- WO-A-94/22535
- US-A- 4 820 576
- PATENT ABSTRACTS OF JAPAN vol. 01 no. 1185 (C-428) ,13 June 1987 & JP-A-62 010142 (DAI ICHI KOGYO) 19 January 1987,
- DATABASE WPI Week 8619 Derwent Publications Ltd., London, GB; AN 86-121276 & JP-A-61 058 735 (BRIDGESTONE TYRE) , 26 March 1986
- PATENT ABSTRACTS OF JAPAN vol. 09 no. 119 (C-282) ,23 May 1985 & JP-A-60 008331 (SUZUKI) 17 January 1985,
- DATABASE WPI Week 8722 Derwent Publications Ltd., London, GB; AN 87-153251 & JP-A-62 089 740 (MITSUI) , 24 April 1987
- DATABASE WPI Week 9511 Derwent Publications Ltd., London, GB; AN 95-077710 & JP-A-07 001 631 (IG GIJUTSU) , 6 January 1995
- DATABASE WPI Week 9511 Derwent Publications Ltd., London, GB; AN 95-077711 & JP-A-07 001 632 (IG GIGUTSU) , 6 January 1995
- DATABASE WPI Week 9511 Derwent Publications Ltd., London, GB; AN 95-077712 & JP-A-70 001 633 (IG GIJUTSU) , 6 January 1995

## Description

The present invention concerns the manufacture of lightweight fire resistant and insulative materials and the use of these materials to fabricate components that are resistant to fires and intense heat.

This current invention relates to the manufacture of wet pastes of phenolic resin expanded with hollow spheres and the subsequent curing of those pastes, normally without the application of external heat, with mixtures containing partial phosphate esters. The cured foams have a significantly reduced tendency to shrink and crack under fire regimes, which is the key to their use as insulating layers, cores of sandwich materials and insulating structures all of which are fire resistant and maintain their insulating properties under fire regimes, and hence are capable of a wider field of application than preceding technologies. Effectively the system allows the production of fire resistant syntactic foams and composite fire resistant articles and structures containing syntactic foams by simple low technology processes.

Syntactic foams are foams created by filling a resinous matrix with a particle that itself contains a closed void, such as a hollow sphere, such that the apparent specific gravity of the particulate material is significantly below the true specific gravity of the solid material from which the sphere is made. This property is then imparted to the resinous matrix in proportion to the volume occupied by the hollow particulate spheres. Because the density of the syntactic foam is reduced by the presence of the hollow spheres, the thermal conductivity is correspondingly lowered. Further, spherical particles have a reinforcing effect, using the same mechanism as fibrous reinforcements. However spherical reinforcements provide isotropic properties whereas fibrous or lamina reinforcements provide directional properties.

It is common practice to apply intumescent coatings to structures such as oil drilling or production platforms to protect these structures from structural collapse in the event of a fire occurring on the structure. The action of these intumescent coatings is to expand from a relatively inert solid to a lightweight insulating foam of sufficient durability to withstand the anticipated fire regime. The weight of the fire protection applied to such floating structures, when using these systems is substantial. The new syntactic foams described and specified herein may be used to form duplex coating in combination with intumescent materials and hence substitute for a substantial proportion of the thickness of such intumescent coatings and provide a method of significantly reducing the weight of the fire protection coatings. The requisite thickness of intumescent or ablative coating is reduced to below the point where mesh reinforcement is required, hence providing a substantial easing of the complexity of installation.

Further, hot risers, that is pipes carrying hot oil or gas from the bore hole to the production platform, cannot be protected from fire by the use of intumescent coatings as the temperature of the substrate is such that the intumescent coating, in contact with the steel substrate would be degraded in time. By installing the syntactic foam between the pipe surface and the intumescent coating, the pipe is both more efficiently protected from fire regimes and the intumescent coating is protected from degradation by the hot substrate. In addition the syntactic foam system being impervious to water and of a closed cell structure, acts as an insulant for these pipes without allowing permeation of corrosive salts.

Intumescent coatings emit substantial amounts of smoke when activated by heat to perform their insulating function. By reducing the total amount of intumescent coating applied to the structure, the potential for smoke emission, that would otherwise retard fire fighting and rescue of trapped persons, is reduced.

U.K. Patent Specification No. 2055867 discloses a thermal insulation composition incorporating a phenolic resin and optional hollow spherical particles in which a pyrocarbon matrix is produced on pyrolysis. Japanese Patent Specification No. 62010142 discloses a blown phenolic foam composition having flame retardancy properties. It is not concerned with fire stability and neither of these prior specifications discloses the use of a partial phosphate ester in combination with a low viscosity phosphate plasticiser which are essential components of the present invention.

This invention concerns fire resistant syntactic foams whereby the tendency of the foams to contract and fail under fire conditions is reduced.

The invention provides a fire resistant syntactic foam material comprising the reaction product of a reaction mixture including a resol cold curing phenolic resin and incorporating a plurality of hollow spheres, characterised in that the reaction mixture also includes a solution of a partial phosphate ester and a low viscosity phosphate plasticiser, the latter being present in an amount up to 8.5% by weight of the phenolic resin.

In a preferred embodiment the invention provides a fire resistant syntactic foam material comprising the reaction product of a reaction mixture including a resol cold curing phenolic resin and a plurality of hollow spheres, characterised in that the reaction mixture also includes a partial phosphate ester and a low viscosity phosphate plasticiser, the proportion by weight of the partial phosphate ester to the phenolic resin in the reaction mixture being in the range of 5% to 15%, the hollow spheres having a specific gravity in the range of 0.15 to 0.35 and an average diameter in the range of 30 to 200 microns, the spheres being present in a concentration in the range of plus or minus 15% of the critical pigment volume concentration and the low viscosity phosphate plasticiser being present in an amount up to 8.5% by weight of the phenolic resin.

The invention also provides a two-part system for the production of a fire resistant syntactic foam material comprising a first reactant including a resol cold curing phenolic resin and a second reactant, one or both of which reactants incorporate a plurality of hollow spheres, characterised in that the second reactant comprises a partial phosphate ester, said spheres are incorporated in one or both of said reactants and the system also incorporates a low viscosity phosphate plasticiser in an amount up to 8.5% by weight of the phenolic resin.

The advantages of this current invention are that the properties sought in the disclosures in the prior art can be achieved with the easiest of process conditions. The foam is presented as a paste that may be pumped or sprayed. The paste will flow under gravity and therefore may be cast into moulds. The paste cold cures with very little generation of heat and therefore cheap plastic moulds may be used. This means that very large articles can easily be formed. In addition to describing how such syntactic foams may be utilised as part of a duplex fire protection coating system, a method of providing a reinforced outer skin is also described herein such that coherent free standing composite or duplex fire protective and fire resistant structures can also be formed.

The foam has good physical properties with or without the reinforced skin as well as being an excellent insulant, but the key attribute of the materials is their behaviour under fire conditions. The matrix resin is phenolic resin modified to contain substantial amounts of phosphorous provided by the curing system and/or a plasticiser. Phenolic resins are known to be fire resistant. However, under fire regimes phenolic resins shrink because of out gassing and crack due to shrinkage stress. These cracks cause the incident fire and heat to penetrate the phenolic structure. The effect of the higher phosphorous content is to reduce this shrinkage and indeed in some formulations to expand. The phenolic foam then is not only flame retardant but can be used as a fire protective barrier or to produce fire resistant articles.

In this invention the foam is derived from a mixture comprising at least two parts. The two reactive components of the matrix must be kept separate until they are required to be utilised. The first reactive component consists of a resol phenolic resin capable of being cold cured by the addition of acid, phosphates. The other reactive component consists of a solution of a partial phosphate ester. One or both of the reactive components has hollow glass spheres dispersed within to expand the final mixture to the target Specific Gravity.

Thus the invention also provides a method of producing a fire resistant syntactic foam material comprising mixing a resol cold curing phenolic resin incorporating hollow spheres with a further constituent and allowing the mixture to cure at ambient temperature, characterised in that the hollow spheres have an effective specific gravity of between 0.15 and 0.35 and an average diameter of between 30 and 200 microns and are mixed at plus or minus 15% of critical pigment volume concentration with the other constituent which comprises a solution of a partial phosphate ester comprising between 5% and 15% by weight of the phenolic resin, and in that the resultant material is in paste form and incorporates a phosphate tri-ester plasticiser in amounts of up to 8.5% by weight of the phenolic resin.

The viscosity of the final mixture may be adjusted by the addition, to both or either, of the reactive components, volatile solvents and/or neutral phosphate plasticisers, such that the wet mixture of all the components can be applied to steel substrates with conventional spray equipment, or can be pumped into moulds and will flow as a casting material.

While the hollow spheres described in the following are comprised of glass, providing the material is resistant to heat and the sphere is sufficiently robust to withstand the shear imposed by the mixer conditions then the sphere may be composed of other materials such as carbon or other refractories, providing always that the reduction of the apparent specific gravity is such to ensure that wall thickness of the sphere is sufficiently low that it provides a very narrow heat flow path. An alternative example might be hollow phenolic spheres such as those manufactured and supplied by Union Carbide under the trade name Ucar micro balloons.

The level of incorporation specified herein is determined by the sphere diameter and apparent SG. In all the formulations specified below the pastes from which the pastes are formed are formulated at just below critical pigment volume concentration as it would be understood by a paint technologist.

The process sequence occurs in three steps and may be illustrated in summary in the following. However, the distribution of the components of the formulation, between the two components and the means of incorporation and application are not fixed or limited by this description.

### Manufacture

(a) Phenolic Foam Paste.
   (1) Select a paste mixer of the trifoil, Z blade or dough mixer type with close control of the rotor speed and shear rate. The mixing pan must be sealed to prevent nuisance dust. A pumped or extruder type discharge system will be required.
   (2) Add to the paste mixer the charge of phenolic resin, phosphate plasticiser, and wetting agent. Mix thoroughly.
   (3) Add any requisite charge of glass fluxing agent and/or reinforcing fibre. Disperse this addition.
   (4) With the rotor operating at very slow speed, add the charge of glass spheres.
   (5) Mix slowly until all the spheres are wetted and incorporated in thick creamy paste.
   (6) Discharge.
(b) Curing Agent.
   (1) To a stainless steel vessel with a slow speed paddle, add water.
   (2) Add Para-toluene sulphonic acid and stir until dissolved.
   (3) Add solution of acid partial phosphate ester.
   (4) Add and mix methoxy-propanol solvent if required.
   (5) Discharge.

### Spray Procedure

(1) Mix phenolic foam with requisite quantity of curing agent, in the spray container using a pneumatic stirrer or similar until the curing agent is fully incorporated. The mixed components have a pot life of approximately one hour at 20°C. Application must be completed within this time. All vessels and apparatus may be water rinsed proving the foam is not cured.
(2) Spray the mixture onto the substrate using conventional spray equipment fitted with any arrangement that will ensure continuous delivery of the paste to an airless pump head.
(3) Wet film thicknesses of 15mm. can be obtained. The foam will cure overnight at room temperature.

### Casting Procedure

The procedure for casting is identical to the above except that a pump may be used to inject the material into the casting moulds. Because the moulds will usually retain the heat of exotherm whereas a sprayed film will loose heat to both the substrate and to atmosphere, curing in closed mould conditions will be substantially faster.

### Example 1

Typically the formulations for the above systems may be as shown below as formulations 1 and 2. Formulation 0 is as might be derived from the prior art.

| Formulation | | 0 | 1 | 2 |
|---|---|---|---|---|
| Syntactic Foam Part A | | | | |
| BP Cellobond J2027-2 | | 73 | 70.9 | 65.3 |
| BAUD BL Microspheres 23 | | 27 | 27.6 | 25.5 |
| 3M FLOURAD FC 431 | | -- | 0.07 | 0.07 |
| TRI CHLOROETHYL PHOSPHATE | | -- | 1.4 | 1.3 |
| ICI Ceepree 200 | | - | - | 1.8 |
| 1/16 milled Glass Fibre | | -- | -- | 3.6 |
| Water | | -- | -- | 2.5 |
| Total | | 100.0 | 100.0 | 100.0 |

| Curing Agent Part B | | | | |
|---|---|---|---|---|
| Water | | 4.0 | 2.0 | 2.0 |
| Paratoluene Suphonic Acid | | 6.0 | 3.0 | 3.0 |
| Budit 380 | | -- | 95.0 | 95.0 |
| 70% Phosphoric Acid | | 90 | -- | -- |
| Mix Ratio | Part A | 100 | 100 | 100 |
| | Part B | 8 | 12 | 15 |

Typically the properties of the new foams compared with that derived from the prior art as formulation 0 will fall between the ranges:-

| Formulations | 0 | 1 | and | 2 |
|---|---|---|---|---|
| Specific Gravity | 0.5 26 | 0.42 5 | to | 0.445 |
| Tensile strength 10⁵ NM⁻² | 2.04 | 5.6 | to | 6.7 |
| Compressive strength 10⁵ NM⁻² | 13.8 | 86 | to | 93 |
| Elongation at break % | 1 | | 3 | |
| Tensile modulus. GN/M² | | | 0.018 | |
| Thermal conductivity W/M⁰K | 0.019 | 0.100 | to | 0.080 |

The results for formulation (0) can only be obtained after a period of tempering at 70°C.

Within this current invention each of the components has the following specification and function.
(1) Phenolic Resins. The cold curing resins are resols typified by, but not specifically, the products of BP Chemicals Limited, sold under the Cellobond trade name. For the purposes of this invention the lowest possible viscosity resin is used typically below 500 c.poise.
(2) Phosphate Plasticiser. The viscosity of the mixture of the uncured syntactic foam is adjusted with up to 8.5% of the weight of the phenolic resin with a phosphate triester plasticiser.
   Any low viscosity phosphate plasticiser may be used such as di methyl methyl phosphonate, or Trichloroethyl phosphate which is available commercially as Genomol P from Hoechst GmbH or as Amgard TCEP from Albright and Wilson Limited.
(3) Surfactant. The incorporation of the hollow spheres into the phenolic resins is improved by the addition of a fluorinated surfactant.
   The efficacy of the formulation both in terms of cohesion and adhesion and the ease of incorporation and of flow is greatly aided by the presence of suitable surfactants. These must be both temperature acid stable and soluble in aqueous media. The preferred material in this embodiment is a fluorinated surfactant typified by the commercial product 3M Florad 431.
(4) Hollow Glass Spheres. As the effectiveness of the product in terms of thermal conductivity is dependent in providing a low thermal conductivity path through the foam then the lightest hollow glass sphere, consistent with durability in mixing and application is satisfactory. That the sphere shatters when exposed to stress or strain is irrelevant with respect to the prevention of incipient cracks, which depends only on the sphere diameter. Further, the careful adjustment of the resin viscosity, the incorporation of suitable wetting agents and the control of the mixer speed are necessary to prevent the rupture of the very light filler incorporated in this invention. Typically the preferred sphere will expand from borosilicate glass with an effective SG of 0.15-0.35 and have a mean particle diameter of 30 - 200 microns. Any such hollow sphere composed of glass or other refractory materials will be satisfactory.
   Within the prescribed materials the effective specific gravity of the foam is adjusted by varying the rate of addition of the hollow glass spheres to between 0.30 and 0.6.
   In this current invention the examples given utilise hollow spheres composed of glass. If hollow spheres composed of refractory or ceramic materials were available the product would be equally efficacious as the performance depends primarily on the modification of the thermal behaviour of the phenolic resin matrix and only partially on the fluxing agents incorporated. However were such refractory or ceramic spheres available within the SGs specified herein then these would be equally efficacious.
(5) Conventionally the acid curing agents used with cold curing phenolic resins have been partially neutralised phosphoric acid. Esters of ortho and higher condensed phosphoric acids suitably accelerated with other acids such as para-toluene sulphonic acids give a slower more thorough cure to the cold curing resins specified herein. Further because the acid value of the partial phosphate esters is lower than for the neutralised phosphoric acids but the pKa value of the residual oxyphosphorous functionality is similar, a greater quantity of such partial phosphate ester curing agent is required to react with the methalol functionality of the resin. In this invention the greater quantity of curing agent added is critical in reducing the mix viscosity to allow the paste to both flow and be sprayed.
   The products specified herein is a partial phosphate ester produced by Chemische Fabrik Budenheim under technology described under Austrian Patent Application No. AT A 1790-91.
   While these commercial products are typically described in this specification other partial phosphate esters such as ethyl and diethyl phosphoric acid and phytic acid, or acid partial phosphate esters produced by means other than by the method specified under AT A 1790-91 will be equally efficacious as curing agents, particularly if the acid value were lower than the current obtainable value of 615 mgms KOH/gm and the phosphorous content was in the same order of magnitude as that currently available at approximately 19%.
   The quantity of partial phosphate ester required to cure the phenolic resin is dependent on the methalol functionality of the phenolic resin. This functionality defines a concentration of partial phosphate ester of between 5 and 15% of partial phosphate ester calculated on the solids of both the partial phosphate ester and the phenolic resin.
(6) Accelerators. The cure rate of the curing system in (100,5) above, is controlled by the addition of para-toluene sulphonic acid or triflouromethanesulfonic acid of up to 5% of the weight of the partial phosphate ester.

(7) Additionally the strength of the foam under fire conditions is advantageously modified by the addition of glass fibres or glass flake. These materials control the mode of thermal decomposition of the structure. Further, the strength of the foam under fire conditions is advantageously modified by the addition of fluxing agents such as a low melting point glass and/or zinc borate, as is shown in formulation 2.

A small loading up to 5% by weight of glass fibres, less than 1.5mm. long together with up to 3% of a glass fluxing agent such as ICI Ceepree or Zinc borate can alter the mode of decomposition under thermal stress. Ceepree is designed to melt and soften at a rate progressive with the temperature typical of normal fibre regimes. Zinc borate behaves in the same manner. The fibres serve as a physical bridge between the hollow spheres. As the phenolic resin is lost by pyrolysis with temperature rise, the Ceepree melts as it is so designed and acts to secure the remaining glass structures together.

The effect of the formulations the subject of this invention, can be seen by subjecting formulations 0, 1 and 2 above to comparative fire tests, and demonstrates how fire resisting duplex or sandwich components or structures can be created where the cold curing syntactic foams, as above are applied as a layer to the surface of other materials or articles to provide a protection against fire and heat.

### Example 2

A skin of glass reinforced phenolic resin, formed according to conventional techniques, 1.5mm. thick resin was laid over casts of 15mm. of the three given fomulations which were themselves bonded to 3mm. steel plate. These structures representing bulkheads were then subjected to a fire regime representing a hydrocarbon fire.

The back face temperature of the steel bulkheads was monitored throughout the test. The failure temperature of 180 °C was reached after 25 minutes for formulation 0, representing the prior art, and 45 minutes for the formulation 1, and 75 minutes for formulation 2. Upon examination it was found that the foam of formulation 0 and 1 had cracked and contracted into a series of approximate hexagons with voids between the hexagons, that has allowed radiation through to the steel. The contraction cracks were considerably more severe on the specimen treated with formulation 0. Whereas the specimen treated with the formulation number 2 was found to have expanded slightly and showed a tendency to laminations perpendicular to the plane of heat flux, thus not allowing radiation through to the steel back face.

The materials may be used to form low cost fire resistant composite structures with the simplest of tooling.

### Example 3

1) A mould was prepared consisting of a hollow tray 200 x 200 x 35mm., with a close fitting lid.
2) A paste consisting 25% by weight, 1.5mm. diameter Owens Corning hammered glass flake in BP Cellobond 2027 phenolic resin, mixed with 17% of the curing agent specified in (50) above was trowelled onto the bottom face and lid of the mould.
3) The rest of the mould was filled with formulation 2 above and the mould lid bearing the uncured paste was pressed onto the wet syntactic foam with hand clamps. The assembly was allowed to cure overnight.

The demoulded structure consisted of a sandwich 3mm. outer skin with 28mm. inner core of syntactic foam. This structure was hard rigid and very stiff. Tested as a fire barrier under conditions representing a hydrocarbon fire, the sample structure indicated that it was itself a satisfactory stable fire barrier material with the potential of providing two hours of fire protection.

The advantages of the new process is additionally illustrated by the following example, which compares the results obtained with a syntactic foam utilises pre-existing technology:-

### Example 4

The three formulations given above and prepared according to the method given above were applied to a 3mm. steel plate representing a bulkhead to a thickness of 10mm.

The formulation (0), based on pre-existing technology cannot be sprayed, it may only be trowelled.

The coatings were then allowed to cure overnight, and then overcoated with a 10mm. thickness of an epoxy based intumescent coating. A similar panel as a control was coated with 20mm. of the intumescent coating.

The samples coated as described above were then subjected to fire test regimes representative of a hydrocarbon fire. It was found that the comparative results are as follows:-

| Sample | 1 | 2 | 3 | 4 |
|---|---|---|---|---|
| Formulation | 0 | 1 | 2 | -- |
| Expoxy Intumescent (mm) | 10 | 10 | 10 | 20 |
| Syntactic Foam Thickness | 10 | 10 | 10 | -- |
| Time to 180°C (mins) | 64 | 126 | 138 | 105 |

Generally we find that for a duplex fire protection system consisting of a syntactic phenolic foam as described applied to elements of structure, by brush, spray or trowelling and then over coated with a conventional intumescent coating, and where the syntactic foam constitutes between 25% and 75% of the thickness of the coating:-
(a) In the case of structural elements, the syntactic foam can be substituted for an equivalent thickness of the intumescent coating with no loss of fire resistance and a weight saving of 33% on the overall fire protection.
(b) In the case of bulkheads the syntactic foam can be substituted for twice the thickness of the intumescent coating for an equivalent fire performance, thus giving a weight saving of 55%.
(c) In the case of hot risers fire protection can be provided on the same scale as either (a) or (b), but even if the hot riser has a surface temperature of 100°C the interface between the syntactic foam and the intumescent coating will not exceed 50° C, thus preventing degradation of the intumescent coating.

As an example of such an application indicative fire test results from protected steel section are as follows:-

### Example 5

A mild steel structural section 167mm. in diameter and with a wall thickness of 6mm., shot blasted and primed with a zinc phosphate modified red oxide epoxy primer was prepared with a 20mm. thick layer of Chartek 59, reinforced with a single layer of welded mesh, according to the manufacturers recommendations.

A similar section was coated with a 15mm. thick layer of syntactic phenolic foam, formulated as described in formulation 2 above, and then over coated with a 7.5mm. layer of Chartek 59. No reinforcement was used in the second specimen.

In both cases four thermocouples were attached to the surface of the steel specimen and the coatings applied over the thermocouples. Both specimens were then installed in a fire test furnace and exposed to a fire regime representing a hydrocarbon fire following the Mobil curve.

The steel in the specimen coated with the epoxy intumescent reached the critical failure temperature of 400°C in 56 minutes. the second specimen with two thirds of the thickness substituted with syntactic phenolic foam reached the same failure condition in 58 minutes. No cracking, detachment or failure of the coating on the test specimen was observed.

A further example of such duplex fire protection systems where a syntactic foam applied to elements of structure is overlaid with lamina of stainless steel mesh bearing a fire resistant coating is illustrated as example 6. In this application the syntactic foam consists of almost the entire thickness of the fire protective coating and thus provides a system with a very low smoke emission.

### Example 6

30mm. of formulation 2 above were coated onto a specimen representing a steel bulkhead as previously described. To the surface of this was bonded by embedding on the surface of the foam a layer of lightweight stainless steel mesh, of 50% open area and 1mm. thick. The surface of the steel was coated with 1.5mm. of Fire Safety Systems HTC 32 high temperature fire resistant coating. This was allowed to cure for the period specified by the manufacture.

The panel was tested as a fire barrier as previously described. This structure showed a fire protection rating of 100 minutes. Similar results have been obtained by changing the support media from stainless steel mesh to a paper composed of a ceramic fibre such as, but not specifically Kaowool.

The reasons for the behaviour of the materials and examples cited above are dependent on their behaviour under thermal stress and may be best illustrated by the following experiment. The oblong solid blocks were made from the formulations shown below. In this case the hollow glass spheres where substituted for solid glass spheres of the same dimensions in order to raise the thermal conductivity of the blocks such that when heated in a controlled oven the interior of the block more rapidly achieved the control temperature. The relative expansion/contraction of the formulations against the temperature gradient was then measured.

| formulation | 1 | 2 | 3 | 4 | 5 | 6 |
|---|---|---|---|---|---|---|
| component | | | | | | |
| phenolic resin | 100 | 100 | 100 | 100 | 100 | 100 |
| phosphoric acid | 9 | -- | -- | -- | -- | -- |
| partial phosphate ester | -- | 13 | 13 | 16 | 16 | 16 |
| trichloroethyl phosphate | -- | -- | 3 | -- | 3 | 3 |
| Trifloromethanesulfonic acid | -- | -- | -- | -- | -- | 1 |
| para toluene sulfonic acid | 1 | 1 | 1 | 1 | 1 | -- |
| glass spheres | 225 | 225 | 225 | 225 | 225 | 225 |
| contraction(-)/expansion(+)% | | | | | | |
| 100°C | +0.47 | +0.13 | +0.06 | +0.11 | +0.15 | +0.05 |
| 200°C | -0.38 | -0.15 | -0.32 | -0.26 | -0.22 | -0.12 |
| 300°C | -0.41 | -0.35 | -0.44 | -0.33 | -0.31 | -0.25 |
| 400°C | -0.57 | -0.31 | -0.47 | -0.42 | -0.38 | -0.33 |
| 500°C | -1.52 | -1.25 | -1.05 | -1.28 | -1.38 | -1.19 |
| 600°C | FF | -4.7 | -4.15 | -3.87 | -3.59 | -3.45 |

| | | | | | | |
|---|---|---|---|---|---|---|
| FF = Failure Sample Crumbled | | | | | | |

Thus, as the critical components are increased and in consequence increase the phosphorous content, tendency of the specimens to contract is reduced. This indicates why the syntactic foams do not exhibit the normal contraction and stress cracking experienced with preceding phenolic resin compositions, when exposed to a fire regime. The addition of the fluxing agent acts to enhance the effect indicated above, but is not illustrated.

## Claims

1. A fire resistant syntactic foam material comprising the reaction product of a reaction mixture including a resol cold curing phenolic resin and incorporating a plurality of hollow spheres, characterised in that the reaction mixture also includes a solution of a partial phosphate ester and a low viscosity phosphate plasticiser, the latter being present in an amount up to 8.5% by weight of the phenolic resin.

2. A fire resistant syntactic foam material comprising the reaction product of a reaction mixture including a resol cold curing phenolic resin and a plurality of hollow spheres, characterised in that the reaction mixture also includes a partial phosphate ester and a low viscosity phosphate plasticiser, the proportion by weight of the partial phosphate ester to the phenolic resin in the reaction mixture being in the range of 5% to 15%, the hollow spheres having a specific gravity in the range of 0.15 to 0.35 and an average diameter in the range of 30 to 200 microns, the spheres being present in a concentration in the range of plus or minus 15% of the critical pigment volume concentration and the low viscosity phosphate plasticiser being present in an amount up to 8.5% by weight of the phenolic resin.

3. A fire resistant material according to claim 1 or 2 characterised in that the reaction mixture includes para-toluene sulphonic acid in an amount up to 5% of the weight of the partial phosphate ester.

4. A fire resistant material according to claim 1 or 2 characterised in that the reaction mixture includes trifluoromethanesulfonic acid in an amount up to 5% of the weight of the partial phosphate ester.

5. A fire resistant material according to any preceding claim characterised in that the concentration of said spheres is such that the effective specific gravity of the material is between 0.3 and 0.6.

6. A fire resistant material according to any preceding claim characterised in that said hollow spheres are formed from a material selected from glass, a refractory material and a ceramic material.

7. A fire resistant material according to any preceding claim characterised in that it includes a durability enhancer selected from glass fibres and glass flake.

8. A fire resistant material according to any preceding claim characterised in that it includes a fluxing agent.

9. A fire resistant material according to claim 8 characterised in that said fluxing agent is selected from low melting point glass and zinc borate.

10. A fire resistant material according to any preceding claim characterised in that the reaction mixture includes a fluorinated surfactant.

11. A two-part system for the production of a fire resistant syntactic foam material comprising a first reactant including a resol cold curing phenolic resin and a second reactant, one or both of which reactants incorporate a plurality of hollow spheres, characterised in that the second reactant comprises a partial phosphate ester, said spheres are incorporated in one or both of said reactants and the system also incorporates a low viscosity phosphate plasticiser in an amount up to 8.5% by weight of the phenolic resin

12. A two part system according to claim 11 characterised in that said phosphate plasticiser is incorporated in said first reactant.

13. A two part system according to claim 11 or 12 characterised in that said second reactant incorporates para-toluene suphonic acid in an amount up to 5% by weight of the partial phosphate ester.

14. A two part system according to claim 11 or 12 characterised in that said second reactant incorporates trifluoromethane sulphonic acid in an amount up to 5% by weight of the partial phosphate ester.

15. A two part system according to any of claims 11 to 14 characterised in that said hollow spheres are formed of a material selected from glass, a refractory material and a ceramic material.

16. A two part system according to any of claims 11 to 15 characterised in that the quantity of said hollow spheres is selected such that the specific gravity of the fire resistant material produced by reaction of said reactants is between 0.3 and 0.6.

17. A two part system according to any of claims 11 to 16 characterised in that said first reactant incorporates a strengthening agent selected from glass fibres and glass flake.

18. A two part system according to any of claims 11 to 17 characterised in that said first reactant incorporates a fluxing agent.

19. A two part system according to any of claims 11 to 18 characterised in that the reaction mixure also incorporates a surfactant.

20. A two part system according to claim 19 characterised in that said surfactant is a fluorinated surfactant.

21. A method of producing a fire resistant material from a two part system according to any of claims 11 to 20 characterised in that said first and second rectants are reacted together under ambient temperature conditions.

22. A method of producing a fire resistant syntactic foam material comprising mixing a resol cold curing phenolic resin incorporating hollow spheres with a further constituent and allowing the mixture to cure at ambient temperature, characterised in that the hollow spheres have an effective specific gravity of between 0.15 and 0.35 and an average diameter of between 30 and 200 microns and are mixed at plus or minus 15% of critical pigment volume concentration with the other constituent which comprises a solution of a partial phosphate ester comprising between 5% and 15% by weight of the phenolic resin, and in that the resultant material is in paste form and incorporates a phosphate tri-ester plasticiser in amounts of up to 8.5% by weight of the phenolic resin.

23. A method according to claim 22 characterised in that para-toluene suphonic acid is added to the phenolic resin in amounts of up to 5% by weight of the partial phosphate ester.

24. A method according to claim 22 or 23 characterised in that said spheres are glass spheres.

25. A method according to any of claims 22 to 24 characterised in that the addition of said spheres is controlled to produce a material having an effective specific gravity of between 0.3 and 0.6.

26. A method according to any of claims 22 to 25 characterised in that there is added to the uncured material a strengthening agent selected from low melting point glass, glass fibres and glass flake.

27. A method according to any of claims 22 to 26 characterised in that there is added to the phenolic resin a fluorinated surfactant.

28. A fire resistant component or structure characterised in that the surface thereof is coated with a fire resistant material according to any preceding claim.

29. A fire resistant component or structure according to claim 28 characterised in that said material forms a core between reinforced phenolic outer layers.

30. A fire resistant component or structure according to claim 28 or 29 characterised in that it is over coated with an intumescent coating.

31. A fire resistant component or structure according to claim 30 characterised in that it is between 25% to 75% of the overall thickness of the coating.

32. A fire resistant component or structure according to any of claims 28 to 31 characterised in that it is overlaid with a lamina of support material bearing a fire resistant or radiant coating.

33. A fire resistant component or structure according to claim 32 characterised in that said support material is stainless steel mesh.

34. A fire resistant component or structure according to claim 32 characterised in that said support material is a paper composed of ceramic fibres.

## Patentansprüche

1. Feuerbeständiges syntaktisches Schaummaterial, welches das Reaktionsprodukt eines Reaktionsgemisches mit einem kaltaushärtenden Resol-Phenolharz aufweist und eine Vielzahl hohler Kugeln enthält, dadurch gekennzeichnet, dass das Reaktionsgemisch auch eine Lösung aus einem partiellen Phosphatester und einem Phosphat-Weichmacher niedriger Viskosität enthält, wobei letzterer in einer Menge von bis zu 8,5 Gew.% des Phenolharzes vorliegt.

2. Feuerbeständiges syntaktisches Schaummaterial, welches das Reaktionsprodukt eines Reaktionsgemisches mit einem kaltaushärtenden Resol-Phenolharz aufweist und eine Vielzahl hohler Kugeln enthält, dadurch gekennzeichnet, dass das Reaktionsgemisch auch eine Lösung aus einem partiellen Phosphatester und einem Phosphat-Weichmacher niedriger Viskosität enthält, wobei der Gewichtsanteil des partiellen Phosphatesters zu dem Phenolharz in dem Reaktionsgemisch im Bereich von 5% bis 15% liegt, die hohlen Kugeln ein spezifisches Gewicht im Bereich von 0,15 bis 0,35 und einen durchschnittlichen Durchmesser im Bereich von 30 bis 200 µm haben, wobei die Kugeln in einer Konzentration im Bereich von plus oder minus 15% der kritischen Pigment-Volumenkonzentration vorliegen und der Phosphat-Weichmacher niedriger Viskosität in einer Menge von bis zu 8,5 Gew.% des Phenolharzes vorliegt.

3. Feuerbeständiges Material nach Anspruch 1 oder 2, dadurch gekennzeichnet, dass das Reaktionsgemisch Paratoluol-Sulfonsäure in einer Menge von bis zu 5% des Gewichtes des partiellen Phosphatesters enthält.

4. Feuerbeständiges Material nach Anspruch 1 oder 2, dadurch gekennzeichnet, dass das Reaktionsgemisch Trifluormethan-Sulfonsäure in einer Menge von bis zu 5% des Gewichtes des partiellen Phosphatesters enthält.

5. Feuerbeständiges Material nach einem der vorhergehenden Ansprüche, dadurch gekennzeichnet, dass die Konzentration der Kugeln derart ist, dass das effektive spezifisch. Gewicht des Materials zwischen 0,3 und 0,6 liegt.

6. Feuerbeständiges Material nach einem der vorhergehenden Ansprüche, dadurch gekennzeichnet, dass die hohlen Kugeln aus einem Material bestehen, bei dem man zwischen Glas, einem feuerfesten Material und einem keramischen Material auswählt.

7. Feuerbeständiges Material nach einem der vorhergehenden Ansprüche, dadurch gekennzeichnet, dass es einen Haltbarkeitserhöher enthält, bei dem man zwischen Glasfasern und Glasflocken auswählt.

8. Feuerbeständiges Material nach einem der vorhergehenden Ansprüche, dadurch gekennzeichnet, dass es ein Flussmittel enthält.

9. Feuerbeständiges Material nach Anspruch 8, dadurch gekennzeichnet, dass das Flussmittel aus einem Glas mit niedrigem Schmelzpunkt und Zinkborat ausgewählt wird.

10. Feuerbeständiges Material nach einem der vorhergehenden Ansprüche, dadurch gekennzeichnet, dass das Reaktionsgemisch einen mit Fluorid versetzten grenzflächenaktiven Stoff enthält.

11. Zweiteiliges System zum Herstellen eines feuerbeständigen syntaktischen Schaummaterials mit einem ersten Reaktanden, der ein kaltaushärtendes Resol-Phenolharz enthält, und einem zweiten Reaktanden, von denen einer oder beide eine Vielzahl hohler Kugeln enthält, dadurch gekennzeichnet, dass der zweite Reaktand einen partiellen Phosphatester aufweist, wobei die Kugeln in einem oder beiden der Reaktanden eingefügt sind und das System auch einen Phosphat-Weichmacher niedriger Viskosität in einer Menge von bis zu 8,5 Gew.% des Phenolharzes enthält.

12. Zweiteiliges System nach Anspruch 11, dadurch gekennzeichnet, dass der Phosphat-Weichmacher in dem ersten Reaktanden enthalten ist.

13. Zweiteiliges System nach Anspruch 11 oder 12, dadurch gekennzeichnet, dass der zweite Reaktand Paratoluol-Sulfonsäure in einer Menge von bis zu 5 Gew.% des partiellen Phosphatesters enthält.

14. Zweiteiliges System nach Anspruch 11 oder 12, dadurch gekennzeichnet, dass der zweite Reaktand Trifluormethan-Sulfonsäure in einer Menge von bis zu 5% des Gewichtes des partiellen Phosphatesters enthält.

15. Zweiteiliges System nach einem der Ansprüche 11 bis 14, dadurch gekennzeichnet, dass die hohlen Kugeln aus einem Material bestehen, bei dem man zwischen Glas, einem feuerfesten Material und einem keramischen Material auswählt.

16. Zweiteiliges System nach einem der Ansprüche 11 bis 15, dadurch gekennzeichnet, dass die Menge der hohlen Kugeln derart ist, dass das spezifische Gewicht des durch die Reaktion der Reaktanden erzeugten feuerfesten Materials zwischen 0,3 und 0,6 liegt.

17. Zweiteiliges System nach einem der Ansprüche 11 bis 16, dadurch gekennzeichnet, dass der erste Reaktand ein Verstärkungsmittel enthält, bei dem man zwischen Glasfasern und Glasflocken auswählt.

18. Zweiteiliges System nach einem der Ansprüche 11 bis 17, dadurch gekennzeichnet, dass der erste Reaktand ein Flussmittel enthält.

19. Zweiteiliges System nach einem der Ansprüche 11 bis 18, dadurch gekennzeichnet, dass das Reaktionsgemisch auch einen grenzflächenaktiven Stoff enthält.

20. Zweiteiliges System nach Anspruch 19, dadurch gekennzeichnet, dass der grenzflächenaktive Stoff ein mit Fluorid versetzter grenzflächenaktiver Stoff ist.

21. Verfahren zum Herstellen eines feuerbeständigen Materials aus einem zweiteiligen System nach einem der Ansprüche 11 bis 20, dadurch gekennzeichnet, dass man den ersten und den zweiten Reaktanden bei Umgebungstemperatur-Bedingungen miteinander reagieren lässt.

22. Verfahren zum Herstellen eines feuerbeständigen syntaktischen Schaummaterials, wobei ein hohle Kugeln enthaltendes kaltaushärtendes Resol-Phenolharz mit einem weiteren Bestandteil gemischt wird und man das Gemisch bei Umgebungstemperatur aushärten lässt, dadurch gekennzeichnet, dass die hohlen Kugeln ein effektives spezifisches Gewicht zwischen 0,15 und 0,35 und einen durchschnittlichen Durchmesser zwischen 30 und 200 µm haben, wobei die Kugeln in einer Konzentration im Bereich von plus oder minus 15% der kritischen Pigment-Volumenkonzentration mit dem anderen Bestandteil vorliegen, der eine Lösung aus einem partiellen Phosphatester aufweist mit 5 bis 15 Gew.% des Phenolharzes, und dass das erhaltene Material in pastöser Form vorliegt und einen Phosphat-Tri-Ester-Weichmacher in einer Menge von bis zu 8,5 Gew.% des Phenolharzes enthält.

23. Verfahren nach Anspruch 22, dadurch gekennzeichnet, dass Paratoluol-Sulfonsäure zu dem Phenolharz in einer Menge von bis zu 5 Gew.% des partiellen Phosphatesters hinzugegeben wird.

24. Verfahren nach Anspruch 22 oder 23, dadurch gekennzeichnet, daß die Kugeln Glaskugeln sind.

25. Verfahren nach einem der Ansprüche 22 bis 24, dadurch gekennzeichnet, dass die Hinzugabe der Kugeln gesteuert wird, um ein Material mit einem effektiven spezifischen Gewicht zwischen 0,3 und 0,6 zu erzeugen.

26. Verfahren nach einem der Ansprüche 22 bis 25, dadurch gekennzeichnet, dass zu dem nicht-ausgehärteten Material ein Verstärkungsmittel hinzugegeben wird, bei dem man aus Glas mit niedrigem Schmelzpunkt, Glasfasern und Glasflocken auswählt.

27. Verfahren nach einem der Ansprüche 22 bis 26, dadurch gekennzeichnet, dass zu dem Phenolharz ein mit Fluorid versetzter grenzflächenaktiver Stoff hinzugegeben wird.

28. Feuerbeständige Komponente oder Struktur, dadurch gekennzeichnet, dass ihre Oberfläche mit einem feuerbeständigen Material nach einem der vorhergehenden Ansprüche beschichtet ist.

29. Feuerbeständige Komponente oder Struktur nach Anspruch 28, dadurch gekennzeichnet, dass das Material einen Kern zwischen verstärkten Phenol-Außenschichten bildet.

30. Feuerbeständige Struktur oder Komponente nach Anspruch 28 oder 29, dadurch gekennzeichnet, dass sie mit einer schäumenden Beschichtung überzogen ist.

31. Feuerbeständige Komponente oder Struktur nach Anspruch 30, dadurch gekennzeichnet, dass sie zwischen 25% und 75% der Gesamtdicke der Beschichtung darstellt.

32. Feuerbeständige Komponente oder Struktur nach einem der Ansprüche 28 bis 31, dadurch gekennzeichnet, dass sie mit einer dünnen Schicht aus Trägermaterial überzogen ist, welches eine feuerbeständige oder strahlende Beschichtung trägt.

33. Feuerbeständige Komponente oder Struktur nach Anspruch 32, dadurch gekennzeichnet, dass das Trägermaterial ein Edelstahl-Geflecht ist.

34. Feuerbeständige Komponente oder Struktur nach Anspruch 32, dadurch gekennzeichnet, dass das Trägermaterial ein aus keramischen Fasern bestehendes Papier ist.

## Revendications

1. Matériau alvéolaire syntactique résistant au feu comprenant le produit de la réaction d'un mélange réactionnel comprenant une résine phénolique durcissable à froid de type résol et contenant une pluralité de sphères creuses, caractérisé en ce que le mélange réactionnel comprend également une solution d'un ester de phosphate partiel et un plastifiant à base d'un phosphate de basse viscosité, ce dernier étant présent en une quantité pouvant aller jusqu'à 8,5 % en poids de la résine phénolique.

2. Matériau alvéolaire syntactique résistant au feu comprenant le produit de la réaction d'un mélange réactionnel comprenant une résine phénolique durcissable à froid de type résol et une pluralité de sphères creuses, caractérisé en ce que le mélange réactionnel comprend également un ester de phosphate partiel et un plastifiant à base d'un phosphate de basse viscosité, la proportion en poids de l'ester de phosphate partiel par rapport à la résine phénolique dans le mélange réactionnel étant dans la plage de 5 à 15 %, les sphères creuses ayant une gravité spécifique dans la plage de 0,15 à 0,35 et un diamètre moyen dans la plage de 30 à 200 microns, les sphères étant présentes à une concentration dans la plage de plus ou moins 15 % de la concentration en volume de pigment critique et le plastifiant à base d'un phosphate de basse viscosité étant présent en une quantité pouvant aller jusqu'à 8,5 % en poids de la résine phénolique.

3. Matériau résistant au feu selon la revendication 1 ou 2, caractérisé en ce que le mélange réactionnel contient de l'acide para-toluènesulfonique en une quantité pouvant aller jusqu'à 5 % en poids de l'ester de phosphate partiel.

4. Matériau résistant au feu selon la revendication 1 ou 2, caractérisé en ce que le mélange réactionnel contient de l'acide trifluorométhanesulfonique en une quantité pouvant aller jusqu'à 5 % en poids de l'ester de phosphate partiel.

5. Matériau résistant au feu selon l'une quelconque des revendications précédentes, caractérisé en ce que la concentration desdites sphères est telle que la gravité spécifique effective du matériau se situe entre 0,3 et 0,6.

6. Matériau résistant au feu selon l'une quelconque des revendications précédentes, caractérisé en ce que lesdites sphères creuses sont formées à partir d'un matériau choisi parmi le verre, une matière réfractaire et une matière céramique.

7. Matériau résistant au feu selon l'une quelconque des revendications précédentes, caractérisé en ce qu'il contient un produit destiné à prolonger sa durée de vie choisi parmi les fibres de verre et les flocons de verre.

8. Matériau résistant au feu selon l'une quelconque des revendications précédentes, caractérisé en ce qu'il contient un agent de fluxage.

9. Matériau résistant au feu selon la revendication 8, caractérisé en ce que ledit agent de fluxage est choisi parmi un verre à bas point de fusion et le borate de zinc.

10. Matériau résistant au feu selon l'une quelconque des revendications précédentes, caractérisé en ce que le mélange réactionnel contient un tensioactif fluoré.

11. Système en deux parties pour la production d'un matériau alvéolaire syntactique résistant au feu comprenant un premier réactif comprenant une résine phénolique durcissable à froid de type résol et un second réactif, un seul ou les deux réactifs contenant une pluralité de sphères creuses, caractérisé en ce que le second réactif comprend un ester de phosphate partiel, lesdites sphères sont incorporées dans un seul desdits réactifs ou les deux, et le système comprend également un plastifiant à base d'un phosphate de basse viscosité en une quantité pouvant aller jusqu'à 8,5 % en poids de la résine phénolique.

12. Système en deux parties selon la revendication 11, caractérisé en ce que ledit plastifiant à base de phosphate est incorporé dans ledit premier réactif.

13. Système en deux parties selon la revendication 11 ou 12, caractérisé en ce que ledit second réactif contient de l'acide para-toluènesulfonique en une quantité pouvant aller jusqu'à 5 % en poids de l'ester de phosphate partiel.

14. Système en deux parties selon la revendication 11 ou 12, caractérisé en ce que ledit second réactif contient de l'acide trifluorométhanesulfonique en une quantité pouvant aller jusqu'à 5 % en poids de l'ester de phosphate partiel.

15. Système en deux parties selon l'une quelconque des revendications 11 à 14, caractérisé en ce que lesdites sphères creuses sont formées à partir d'un matériau choisi parmi le verre, une matière réfractaire et une matière céramique.

16. Système en deux parties selon l'une quelconque des revendications 11 à 15, caractérisé en ce que la quantité desdites sphères creuses est choisie de manière à ce que la gravité spécifique du matériau résistant au feu produit par la réaction desdits réactifs se situe entre 0,3 et 0,6.

17. Système en deux parties selon l'une quelconque des revendications 11 à 16, caractérisé en ce que ledit premier réactif contient un agent de renforcement choisi parmi les fibres de verre et les flocons de verre.

18. Système en deux parties selon l'une quelconque des revendications 11 à 17, caractérisé en ce que le premier réactif contient un agent de fluxage.

19. Système en deux parties selon l'une quelconque des revendications 11 à 18, caractérisé en ce que le mélange réactionnel contient également un tensioactif.

20. Système en deux parties selon la revendication 19, caractérisé en ce que ledit tensioactif est un tensioactif fluoré.

21. Procédé de production d'un matériau résistant au feu à partir d'un système en deux parties selon l'une quelconque des revendications 11 à 20, caractérisé en ce que lesdits premier et second réactifs sont mis à réagir ensemble dans des conditions de température ambiante.

22. Procédé de production d'un matériau alvéolaire syntactique résistant au feu comprenant les étapes consistant à mélanger une résine phénolique durcissable à froid de type résol contenant des sphères creuses avec un autre constituant et à laisser le mélange durcir à la température ambiante, caractérisé en ce que les sphères creuses ont une gravité spécifique effective entre 0,15 et 0,35 et un diamètre moyen entre 30 et 200 microns et sont mélangées à raison de plus ou moins 15 % de la concentration en volume de pigment critique avec l'autre constituant qui comprend une solution d'un ester de phosphate partiel représentant entre 5 et 15 % en poids de la résine phénolique, et en ce que le matériau résultant est sous la forme d'une pâte et contient un plastifiant de type triester de phosphate en des quantités pouvant aller jusqu'à 8,5 % en poids de la résine phénolique.

23. Procédé selon la revendication 22, caractérisé en ce que l'acide para-toluènesulfonique est ajouté à la résine phénolique en des quantités pouvant aller jusqu'à 5 % en poids de l'ester de phosphate partiel.

24. Procédé selon la revendication 22 ou 23, caractérisé en ce que lesdites sphères sont des sphères de verre.

25. Procédé selon l'une quelconque des revendications 22 à 24, caractérisé en ce que l'addition desdites sphères est contrôlée de manière à produire un matériau ayant une gravité spécifique effective se situant entre 0,3 et 0,6.

26. Procédé selon l'une quelconque des revendications 22 à 25, caractérisé en ce que l'on ajoute au matériau, à l'état non durci, un agent de renforcement choisi parmi un verre à bas point de fusion, des fibres de verre et des flocons de verre.

27. Procédé selon l'une quelconque des revendications 22 à 26, caractérisé en ce que l'on ajoute à la résine phénolique un tensioactif fluoré.

28. Composant, ou structure, résistant au feu, caractérisé en ce que sa surface est revêtue d'un matériau résistant au feu selon l'une quelconque des revendications précédentes.

29. Composant, ou structure, résistant au feu selon la revendication 28, caractérisé en ce que ledit matériau forme un coeur entre des couches extérieures phénoliques renforcées.

30. Composant, ou structure, résistant au feu selon la revendication 28 ou 29, caractérisé en ce qu'il est protégé par un revêtement intumescent.

31. Composant, ou structure, résistant au feu selon la revendication 30, caractérisé en ce qu'il représente de 25 à 75 % de l'épaisseur totale du revêtement.

32. Composant, ou structure, résistant au feu selon l'une quelconque des revendications 28 à 31, caractérisé en ce qu'il est recouvert d'une couche de matériau de support portant un revêtement résistant au feu ou rayonnant.

33. Composant, ou structure, résistant au feu selon la revendication 32, caractérisé en ce que ledit matériau de support est un support à mailles en acier inoxydable.

34. Composant, ou structure, résistant au feu selon la revendication 32, caractérisé en ce que ledit matériau de support est un papier à base de fibres céramiques.
